(19) **Europäisches Patentamt / European Patent Office / Office européen des brevets**

(11) **EP 3 246 651 B1**

(12) **FASCICULE DE BREVET EUROPÉEN**

(45) Date de publication et mention
de la délivrance du brevet:
**29.05.2019 Bulletin 2019/22**

(51) Int Cl.:
*F28F 13/12* (2006.01)       *F25B 39/02* (2006.01)
*F28C 3/00* (2006.01)        *F28D 7/00* (2006.01)
*F28D 7/02* (2006.01)

(21) Numéro de dépôt: **17154702.9**

(22) Date de dépôt: **03.02.2017**

(54) **ÉCHANGEUR THERMIQUE À AU MOINS TROIS FLUIDES À EFFICACITÉ AMÉLIORÉE**

**WÄRMETAUSCHER MIT MINDESTENS DREI FLUIDEN MIT VERBESSERTER EFFIZIENZ**

**HEAT EXCHANGER WITH AT LEAST THREE FLUIDS HAVING IMPROVED EFFICIENCY**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.02.2016 FR 1650944**

(43) Date de publication de la demande:
**22.11.2017 Bulletin 2017/47**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **MARIOTTO, Mathieu
  38190 VILLARD-BONNOT (FR)**
• **BOUDEHENN, François
  07190 SAINT SAUVEUR DE MONTAGUT (FR)**
• **TRICHE, Delphine
  13390 AURIOL (FR)**

(74) Mandataire: **Brevalex
95, rue d'Amsterdam
75378 Paris Cedex 8 (FR)**

(56) Documents cités:
**WO-A2-2013/041066      DE-B3-102007 050 799
FR-A- 1 058 967      US-A- 2 456 775**

Remarques:
Le dossier contient des informations techniques
présentées postérieurement au dépôt de la demande
et ne figurant pas dans le présent fascicule.

EP 3 246 651 B1

## Description

### DOMAINE TECHNIQUE ET ÉTAT DE LA TECHNIQUE ANTÉRIEURE

La présente invention se rapporte à un échangeur thermique mettant en oeuvre au moins trois fluides, présentant une efficacité améliorée.

Le document DE 10 2007 050 799 décrit un dispositif pour humidifier un gaz, comportant un échangeur thermique comprenant des tubes. Ce document décrit un échangeur selon le préambule de la revendication 1.

Un échangeur thermique mettant en oeuvre trois fluides est par exemple mis en oeuvre dans les machines thermiques dont le fonctionnement est basé sur des cycles thermodynamiques utilisant les phénomènes d'absorption/désorption entre deux fluides, i.e. un échange de masse par exemple entre un liquide et un gaz. Une telle machine thermique comporte un absorbeur et un désorbeur, formés chacun par exemple par un échangeur thermique, majoritairement des échangeurs à plaques.

Le fonctionnement d'un échangeur à plaque est le suivant. Un film de liquide ruisselant est formé sur les faces verticales d'une partie des plaques, une plaque sur deux, un gaz s'écoule entre ces plaques. On souhaite réaliser soit une absorption, soit une désorption. L'absorption consiste en un échange de matière du gaz vers le liquide, et la désorption consiste en une libération de matière à partir du liquide sous forme de gaz. Par exemple on choisit le couple eau-ammoniac. Dans l'absorbeur, de l'eau pauvre en ammoniac ruisselle sous forme de film le long des plaques, de l'ammoniac sous forme gazeuse s'écoule entre les plaques, celui-ci est absorbé par l'eau. L'absorption étant exothermique, un caloporteur froid circule dans les autres canaux favorisant ainsi la réaction.

Dans le désorbeur, de l'eau riche en ammoniac ruisselle sous forme de film le long des plaques. La désorption étant endothermique, un caloporteur chaud circule dans au moins une partie des plaques, un canal sur deux, favorisant ainsi la réaction de désorption, de l'ammoniac sous forme gazeuse est libéré.

Ce type d'échangeur a l'inconvénient de présenter un temps de séjour des fluides relativement court, ce qui est nuisible au rendement d'absorption et donc au rendement énergétique de la machine thermique.

### EXPOSÉ DE L'INVENTION

C'est par conséquent un but de la présente invention d'offrir un échangeur thermique mettant en oeuvre au moins trois fluides présentant une efficacité améliorée.

Le but mentionné ci-dessus est atteint par un échangeur thermique à au moins trois fluide comportant un élément s'étendant selon une direction longitudinale, ledit élément étant au moins en partie creux, ledit élément comportant au moins un chemin hélicoïdal destiné à la mise en contact entre au moins un premier fluide et au moins un deuxième fluide, ledit élément comportant une première surface définissant ledit chemin hélicoïdal et une deuxième surface opposée à la première surface définissant au moins en partie un conduit de circulation d'un troisième fluide de sorte à assurer un échange thermique avec le premier et le deuxième fluide le long du chemin hélicoïdal et à isoler le troisième fluide des premier et deuxième fluides.

Grâce à l'invention, les deux fluides à mettre en contact ont un temps de parcours le long de l'échangeur augmenté par rapport aux échangeurs de l'état de la technique puisqu'ils s'écoulent le long d'un chemin hélicoïdal et non le long de plans verticaux. En outre, pendant tout leur parcours au sein de l'échangeur les fluides échangent de la chaleur avec le caloporteur qui circule le long du chemin. De cette manière, les échanges entre le premier et le deuxième fluide et/ou la ou les réactions entre le premier et le deuxième fluide sont favorisés.

En d'autres termes, on réalise un dispositif échangeur à au moins un canal fluidique, un élément d'échange thermique disposé dans le canal fluidique, chaque élément d'échange thermique présentant une forme d'au moins une hélice, et l'hélice délimitant un chemin hélicoïdal dans lequel au moins deux fluides circulent provoquant leur mise en contact. L'hélice assure également un échange thermique avec un caloporteur sur au moins une partie du chemin hélicoïdal. Dans le cas d'un liquide et d'un gaz, le liquide ruisselle sur la surface du chemin et le gaz circule dans le chemin. Ainsi, une zone de mise en contact des premier et deuxième fluides est rallongée tout en assurant un échange thermique le long de toute la zone de mise en contact.

Dans un mode particulièrement avantageux, la structure est au moins en partie creuse, la partie creuse définissant un canal hélicoïdal de circulation du troisième fluide, la première surface étant une surface extérieure de l'élément.

De préférence, l'angle du chemin hélicoïdal est faible afin d'augmenter la longueur du chemin de mise en contact et donc le temps de parcours.

Avantageusement, la structure est au moins à double hélice, de préférence à trois ou de manière encore préférée, à quatre hélices.

L'échangeur selon la présente invention peut par exemple être mis en oeuvre dans une machine thermique à absorption ou dans un système de traitement d'air.

La présente invention a alors pour objet un échangeur thermique à au moins trois fluides selon la revendication 1.

Avantageusement, l'échangeur comporte plusieurs premières parois hélicoïdales et plusieurs deuxièmes parois hélicoïdales imbriquées.

L'échangeur comporte de préférence un noyau central longitudinal plein autour duquel sont enroulées les première et deuxième parois hélicoïdales et auquel elles sont reliées de manière étanche délimitant un canal hélicoïdal débouchant au niveau des première et deuxième extrémités longitudinales du canal fluidique.

Dans un exemple de réalisation, les premières parois hélicoïdales et les deuxièmes parois hélicoïdales sont reliées au noyau central longitudinal de sorte à définir au moins une double hélice.

Selon une caractéristique additionnelle, au moins la première surface et/ou la deuxième surface est structurée de sorte à augmenter la surface d'échange.

L'échangeur thermique peut comporter une structure d'échange comportant plusieurs canaux fluidiques d'axes longitudinaux parallèles, et plusieurs éléments d'échange, chaque élément d'échange étant monté dans un canal fluidique.

L'échangeur peut comporter des moyens de distribution et de collecte des fluides dans les canaux fluidiques et les canaux hélicoïdaux. Dans un exemple avantageux, les moyens de distribution et de collecte comportent au moins un distributeur-collecteur situé au-dessus ou au-dessous de la structure d'échange.

L'échangeur peut comporter un distributeur-collecteur supérieur situé au-dessus de structure d'échange et un distributeur-collecteur inférieur situé au-dessous de la structure d'échange, les distributeurs-collecteurs supérieur et inférieur étant tels qu'ils assurent l'alimentation et la collecte du troisième fluide circulant dans les canaux hélicoïdaux et l'alimentation et la collecte de premier et deuxième fluides dans les canaux fluidiques.

De manière avantageuse, les distributeurs-collecteurs inférieur et supérieur assurent une circulation à contre-courant du deuxième fluide par rapport au premier fluide et au troisième fluide.

Par exemple, le premier fluide est un liquide et le distributeur-collecteur supérieur assure une alimentation des canaux fluidiques avec le premier fluide par débordement, le premier fluide formant un film ruisselant sur la première surface.

Le troisième fluide peut être un liquide et le distributeur-collecteur supérieur assure une alimentation des canaux hélicoïdaux par débordement.

Le deuxième fluide peut être un gaz et le distributeur-collecteur inférieur assure l'alimentation des canaux fluidiques en deuxième fluide et la collecte du premier fluide et/ou du troisième fluide. L'enceinte peut alors comporter un fond inférieur collectant le premier fluide ou le troisième fluide, et peut être apte à former une réserve ou un réservoir tampon. Le distributeur-collecteur supérieur peut assurer la collecte du deuxième fluide et le distributeur-collecteur supérieur peut être tel que le deuxième fluide traverse le premier fluide dans le distributeur-collecteur supérieur avant d'être collecté.

Selon une caractéristique additionnelle, l'échangeur thermique peut comporter un canal entourant l'enceinte et sensiblement à l'aplomb du distributeur-collecteur supérieur, ledit canal étant destiné à la collecte du deuxième fluide par au moins une première fenêtre, avantageusement deux fenêtres, réalisée(s) dans l'enceinte et/ou un canal entourant l'enceinte et sensiblement à l'aplomb du distributeur-collecteur inférieur et destiné à l'alimentation en deuxième fluide, ledit canal étant destiné à la collecte du deuxième fluide par au moins une deuxième fenêtre, avantageusement deux fenêtres, réalisée(s) dans l'enceinte.

Les éléments d'échange peuvent également comporter des connecteurs à leurs extrémités longitudinales pour la circulation du troisième caloporteur, lesdits connecteurs étant sensiblement plans. L'enceinte les au moins première et deuxième fenêtres peuvent être disposées de sorte que la collecte du deuxième fluide se fait parallèlement auxdits connecteurs.

De manière avantageuse, au moins la pente de la première paroi hélicoïdale est comprise entre 10° et 45° et est de préférence égale à 15°.

La présente invention a également pour objet une machine thermique à absorption selon la revendication 13.

La machine thermique à absorption peut comporter au moins un échangeur thermique entre les premiers fluides circulant entre le premier et le deuxième échangeur thermique.

Le circuit de connexion transportant le deuxième fluide peut comporter un évaporateur et avantageusement un condenseur.

Par exemple, le premier fluide est un mélange d'eau liquide et de $NH_3$ et le deuxième fluide est du $NH_3$.

La présente invention a également pour objet un système de traitement d'un fluide gazeux, le fluide gazeux étant le deuxième fluide, selon la revendication 14.

Par exemple, le fluide gazeux est l'air et le premier fluide est de l'eau, le deuxième échangeur est alimenté avec l'air d'un bâtiment et le premier échangeur est alimenté avec l'air prélevé à l'extérieur du bâtiment, l'air sortant du premier échangeur étant à une température inférieure à celle de l'air sortant dans le deuxième échangeur thermique et présentant un taux d'humidité inférieur à celui de l'air sortant du deuxième échangeur thermique.

## BRÈVE DESCRIPTION DES DESSINS

La présente invention sera mieux comprise sur la base de la description qui va suivre et des dessins en annexe sur lesquels:

- la figure 1A est une vue de l'extérieur d'un exemple d'un échangeur thermique selon l'invention,
- la figure 1B est une vue en coupe de l'échangeur de la figure 1A le long d'un plan parallèle à l'axe longitudinal de l'échangeur,
- la figure 2A est une vue en perspective d'une structure d'échange de l'échangeur thermique selon un exemple de réalisation,
- la figure 2B est une vue de la structure d'échange de la figure 2A vue selon le point de vue de la flèche A,
- la figure 3 est une vue en perspective d'un élément d'échange selon un exemple de réalisation,
- la figure 4 est une vue en coupe longitudinale de l'élément d'échange de la figure 3 ;
- la figure 5A illustre les écoulements dans et sur l'élément d'échange de la figure 3,
- la figure 5B illustre les échanges thermiques sur et à travers l'élément d'échange de la figure 3,
- les figures 6A, 6B et 6C sont des vues en perspective d'un élément d'échange selon d'autres variantes de réalisation,
- la figure 7 est une vue en perspective d'un autre exemple de réalisation d'une structure d'échange,
- les figures 8A et 8B sont des vues en perspective et de détail respectivement d'une structure d'échange selon un autre exemple de réalisation,
- la figure 9 est une vue en coupe transversale de l'échangeur de la figure 1 suivant le plan P1,
- la figure 10 est une représentation schématique de l'intérieur de l'échangeur de la figure 1A selon un exemple de réalisation au niveau de la partie supérieure, illustrant les écoulements des fluides,
- la figure 11A est une vue en coupe transversale de l'échangeur de la figure 1 suivant le plan P2,
- la figure 11B est une représentation schématique de l'intérieur de l'échangeur de la figure 1A selon un exemple de réalisation au niveau de la partie inférieure, illustrant les écoulements des fluides,
- la figure 12 est une représentation d'une machine thermique par absorption mettant en oeuvre deux échangeurs selon l'invention,
- la figure 13 est une représentation d'un système de traitement d'air mettant en oeuvre deux échangeurs selon l'invention.

## EXPOSÉ DÉTAILLÉ DE MODES DE RÉALISATION PARTICULIERS

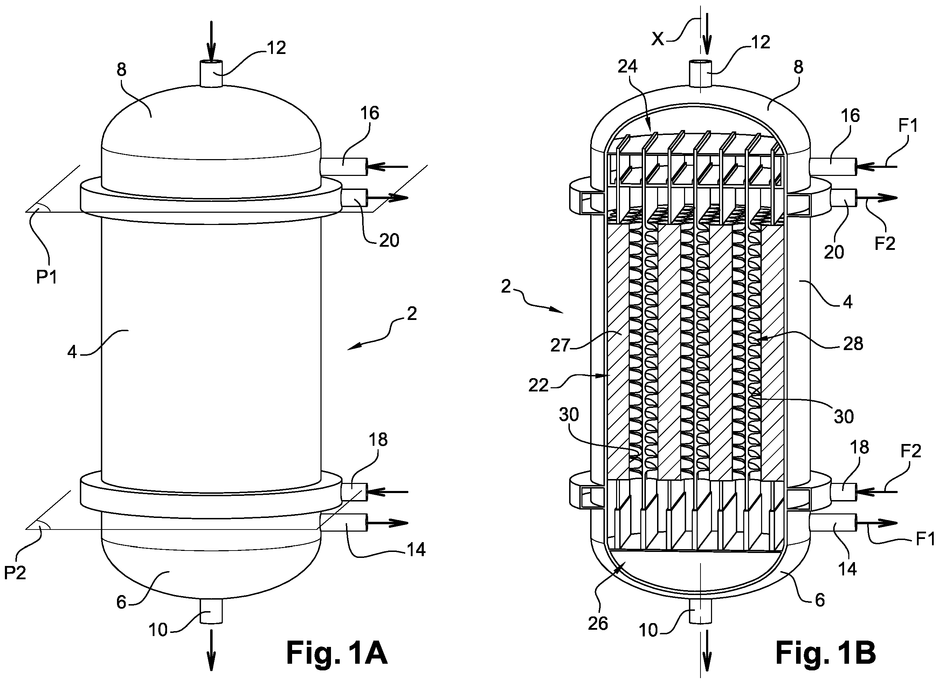

Les termes « supérieur » et « inférieur » sont à considérer par rapport à la représentation sur les figures 1A et 1B, l'échangeur ou les échangeurs étant de préférence utilisés avec leur axe longitudinal orienté verticalement ou sensiblement verticalement.

Sur les figures 1A et 1B, on peut voir un exemple de réalisation d'un échangeur thermique selon l'invention.

L'échangeur thermique comporte une enceinte 2 d'axe longitudinal X comportant une virole 4, un fond bombé 6 en partie inférieure et un fond bombé 8 en partie supérieure. La forme de révolution de l'enceinte 2 n'est en aucun cas limitative, l'enceinte pourrait avoir une section transversale polygonale, par exemple carrée ou hexagonale. En outre, les fonds pourraient être plans ou l'un seulement pourrait être bombé.

Dans l'exemple représenté, l'échangeur comporte des connecteurs 10, 12 dans les fonds bombés 6, 8 respectivement pour la circulation d'un caloporteur F3 dans l'échangeur, des connecteurs 14, 16 en parties inférieure et supérieure de la virole 4 respectivement pour la circulation d'un premier fluide F1 dans l'échangeur et des connecteurs 18, 20 en partie inférieure et supérieure respectivement de la virole 4 pour la circulation d'un deuxième fluide F2 dans l'échangeur.

Le caloporteur F3 peut être sous forme liquide, gazeuse ou être un fluide à l'équilibre liquide-vapeur.

Le fluide F1 peut être un liquide ou un gaz et le fluide F2 peut être un liquide ou un gaz.

Le premier fluide F1 et le deuxième fluide F2 sont destinés à entrer en contact et le caloporteur est destiné à circuler dans l'échangeur pour échanger de la chaleur avec les premier et deuxième fluides F1et F2 sans entrer en contact avec les premier et deuxième fluides F1 et F2.

Sur la figure 1B, on peut voir une vue en coupe de l'échangeur le long d'un plan parallèle à l'axe longitudinal mais ne comprenant pas cet axe.

L'échangeur comporte une structure d'échange 22, un premier distributeur-collecteur 24 en partie supérieure et un deuxième distributeur-collecteur 26 en partie inférieure.

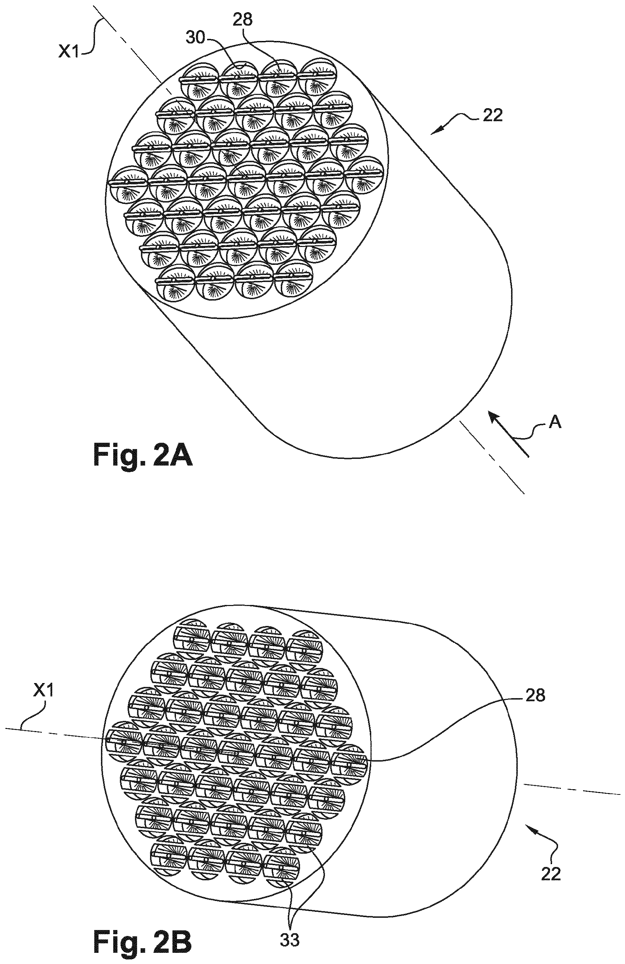

La structure d'échange 22, représentée seule sur les figures 2A et 2B, comporte un corps 27 d'axe longitudinal X1 coaxial à l'axe X, muni de canaux fluidiques longitudinaux 30 et des éléments d'échange 28 reçus chacun dans un canal fluidique 30.

Dans l'exemple représenté, le corps 27 a une forme de cylindre de révolution de diamètre adapté au diamètre intérieur de la virole 4.

La structure 22 est par exemple supportée dans la virole par des supports, par exemple soudés sur la surface intérieure de la virole. Ces supports peuvent être continus et courir le long de tout le périmètre intérieur de la virole ou être discontinus. En variante on peut envisager une grille formant le support, cette grille serait par exemple soudée. En variant encore, le deuxième distributeur collecteur 26 peut assurer par le biais de support verticaux le maintien de la structure.

Sur la figure 2B qui représente la structure 22 suivant le point de vue de la flèche A, on peut voir les fonds inférieurs des canaux fluidiques 30, ceux-ci comportent des butées longitudinales 31 pour les éléments d'échange 28 qu'ils reçoivent. Ces éléments de butée sont ajourés pour permettre le passage des fluides F1 et F2, il s'agit par exemple de grilles.

Le matériau du corps est choisi principalement pour ne pas interagir avec les fluides mis en jeu dans l'échangeur spécifiquement en termes de phénomènes d'absorption/désorption. De plus, le matériau et le dimensionnent du corps sont choisis de préférence pour supporter des pressions allant jusqu'à 20 bars et de préférence pour supporter une température en fonctionnement de pointe de 100°C et en régime nominal de 60°C.

De préférence, le matériau est mauvais conducteur thermique et présente une inertie thermique faible, afin de favoriser la dynamique de mise en régime du système, et le fonctionnement en régime transitoire.

De manière avantageuse, le corps est réalisé en matériau(x) polymères sont, mais il est envisageable de réaliser le corps dans d'autres matériaux tels que des aciers. Il peut également être envisagé de réaliser le corps en un matériau poreux.

Les éléments d'échange pourraient être maintenu dans les canaux fluidiques par tout autre moyen, par exemple par une plaque ajourée unique recouvrant toute la face inférieure de la structure ou par des moyens situés au niveau des extrémités supérieures des canaux fluidiques et suspendant les éléments d'échange dans les canaux fluidiques.

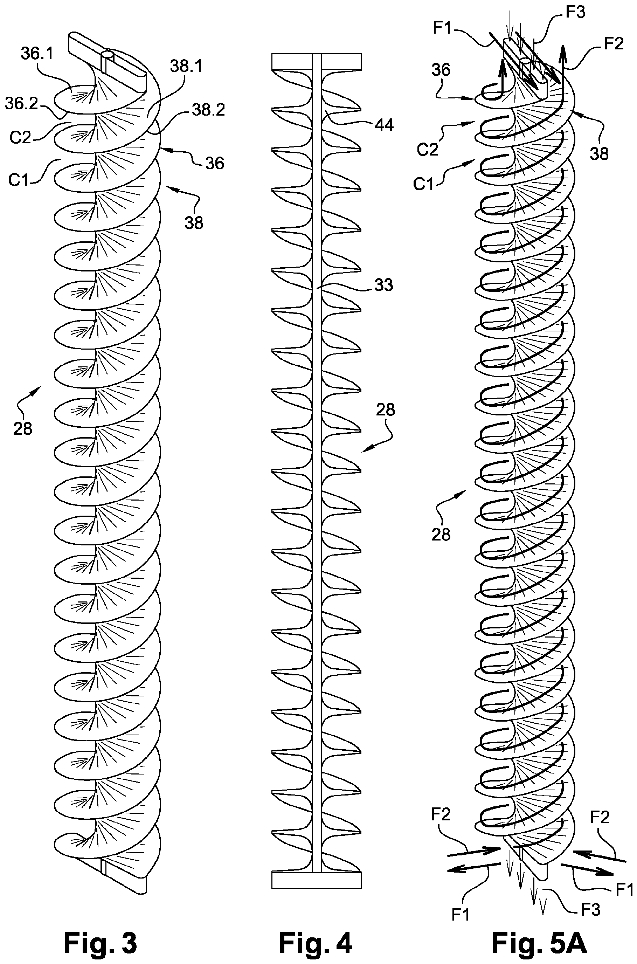

Sur les figures 3 et 4, on peut voir un exemple d'un élément d'échange 28. L'élément 28 comporte un corps de révolution à double hélice. Le corps est creux et comporte un noyau central 33. Le noyau central 33 est avantageusement plein comme cela sera expliqué par la suite.

L'élément d'échange 28 d'axe longitudinal X2 parallèle à l'axe X1 et à l'axe X lorsqu'il est en place dans l'enceinte, comporte à chacune de ses extrémités longitudinales un connecteur 32, 34 pour permettre la circulation du fluide à l'intérieur de l'élément 28.

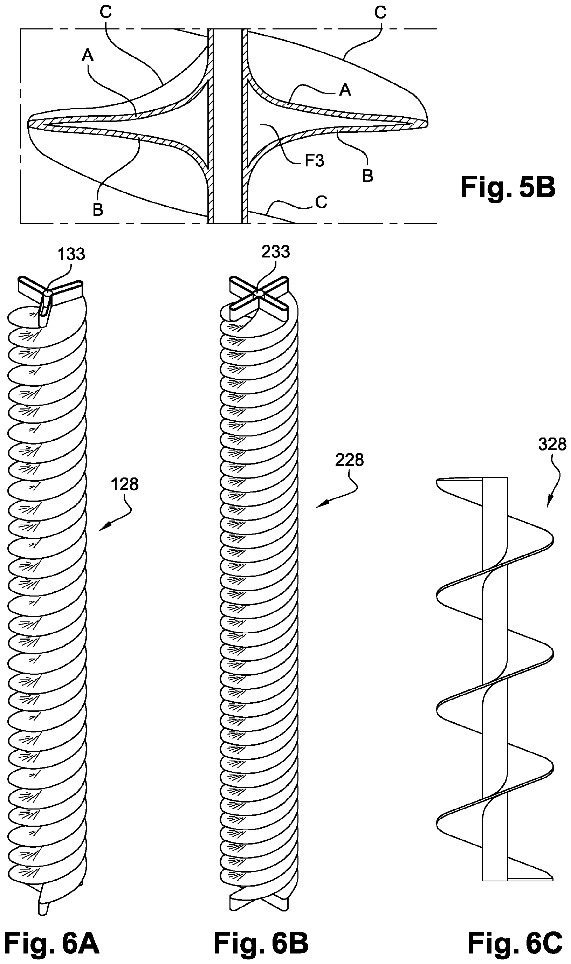

Le corps de l'élément 28 comporte deux hélicoïdes 36, 38 imbriquées l'une dans l'autre. L'hélicoïde 36 comporte une surface hélicoïdale supérieure 36.1 et une surface hélicoïdale inférieure 36.2 se rejoignant par leurs bords radialement extérieurs et s'enroulant autour du noyau central 33. Un canal hélicoïdal 40, partiellement visible sur les figures 5A et 5B, est défini entre les deux surfaces 36.1, 36.2. L'hélicoïde 38 comporte une surface hélicoïdale supérieure 38.1 et une surface hélicoïdale inférieure 38.2 se rejoignant par leurs bords radialement extérieurs et s'enroulant autour du noyau central 33. Un canal hélicoïdal 44, partiellement visible sur les figures 5A et 5B, est défini entre les deux surfaces 38.1, 38.2.

De manière avantageuse, l'angle des hélicoïdes est compris entre 10° et 45° et de manière préférée égale à 15°, permettant d'obtenir un temps de séjour long, un débit linéique du film ruisselant et une épaisseur du film ruisselant optimisés.

Le noyau central 33 est avantageusement plein pour forcer le caloporteur a effectivement s'écouler dans le canal hélicoïdal 44.

De préférence, l'élément 28 est réalisé en un matériau bon conducteur thermique pour favoriser les échanges thermiques à travers les surfaces 36.1 et 36.2. L'élément 28 est réalisé par exemple en un matériau métallique, tel que l'acier, l'acier inox, le cuivre, l'aluminium, en matériau polymère chargé. Le matériau de l'élément 28 est choisi de sorte à être compatible avec les fluides avec lequel il entre en contact.

Un chemin d'écoulement CI pour les fluides F1 et F2 est délimité entre la surface supérieure 36.1 et la surface inférieure 38.2 et un chemin d'écoulement C2 pour les fluides F1 et F2 est délimité entre la surface supérieure 38.1 et la surface inférieure 36.2.

Le diamètre extérieur de l'élément d'échange 28 qui est celui des hélices correspond sensiblement au diamètre intérieur du canal fluidique dans lequel il est monté, aux jeux de montage près, afin d'éviter tout court-circuit fluidique entre le bord de l'élément d'échange et la surface intérieure du canal fluidique. Un tel ou de tels courts-circuits auraient pour effet de réduire le temps d'écoulement des fluides F1 et F2 au sein de la structure d'échange et les échanges thermiques avec le caloporteur seraient dégradées. Le jeu est par exemple inférieur à 5 mm. Le jeu est choisi en fonction des matériaux utilisés pour tenir compte de leur dilatation thermique.

De manière avantageuse, les surfaces 36.1, 36.2, 38.1, 38.2 des éléments d'échange 28 peuvent être structurées pour augmenter le temps de séjour des fluides F1 et F2 et la surface d'échange avec le caloporteur. Les surfaces 36.1, 36.2, 38.1, 38.2 des éléments d'échange 28 peuvent comporter des picots et/ou plots et/ou présenter une certaine rugosité.

Sur les figures 6A à 6C, on peut voir des variantes de réalisation de l'élément d'échange.

Sur la figure 6A, l'élément d'échange 128 comporte un corps de révolution à triple hélice, dans lequel trois chemins d'écoulement sur la surface extérieur de l'élément d'échange 128 et trois canaux hélicoïdaux pour la circulation du caloporteur autour du noyau central 133 sont délimités.

Sur la figure 6B, l'élément d'échange 228 comporte un corps de révolution à quatre hélices, comprenant quatre chemins d'écoulement autour du noyau central 233 et quatre canaux hélicoïdaux pour la circulation du caloporteur. L'élément d'échange est avantageux car il offre une grande compacité tout en présentant une complexité de réalisation et un coût de fabrication raisonnables.

Sur la figure 6C, l'élément d'échange 328 comporte un corps de révolution à simple hélice, dans lequel un chemin d'écoulement sur la surface extérieure de l'élément d'échange 328 est délimité et un canal hélicoïdal pour la circulation du caloporteur. Dans cette variante, le corps de l'élément 328 comporte une seule hélicoïde, le chemin d'écoulement étant délimité entre la surface inférieure de l'hélicoïde et la surface supérieure de l'hélicoïde. Cet élément 328 comporte un seul canal hélicoïdal pour le caloporteur

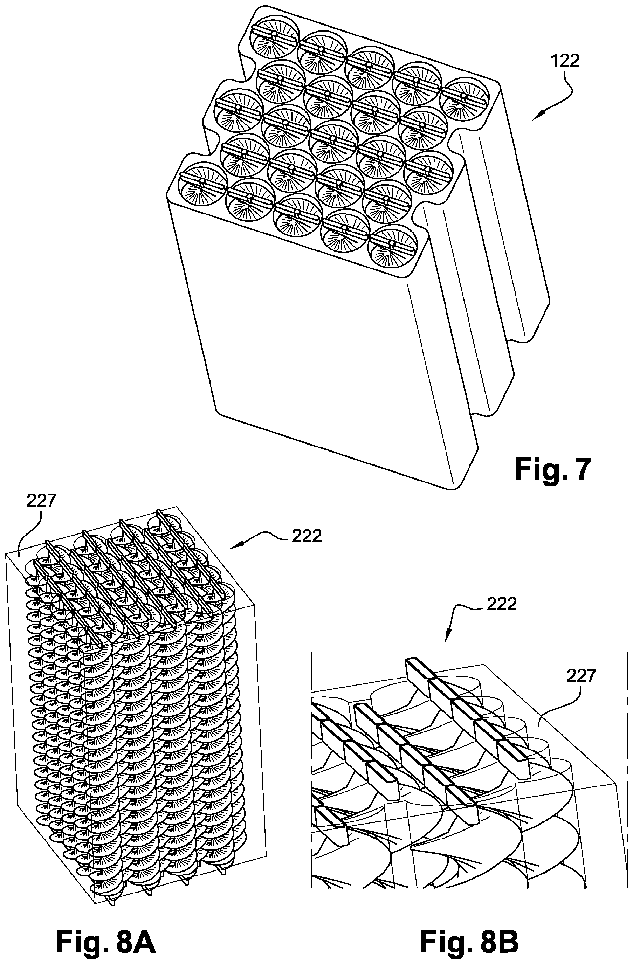

Sur la figure 7, on peut voir un autre exemple de réalisation d'une structure d'échange 122 comportant un corps de section transversale carrée. Toute autre forme peut convenir. La forme de la virole est alors adaptée en fonction de la forme de la structure. Le corps comporte des canaux fluidiques distincts les uns des autres et logeant chacun un élément d'échange thermique 128.

Sur les figures 8A et 8B, on peut voir une structure 222 selon une variante de réalisation de la structure de la figure 7 mais cette variante peut s'appliquer à la structure des figures 2A et 2B.

Dans cette variante, les éléments 28 sont disposés les uns par rapport aux autres de sorte qu'ils s'imbriquent latéralement les uns dans les autres, i.e. que les bords de l'hélice d'un élément pénètrent entre les bords de l'hélice d'un élément adjacent. En considérant l'enveloppe géométrique d'un élément d'échange, les enveloppes géométriques de deux éléments d'échange adjacents ont une zone commune. Il est à noter que les éléments d'échange ne sont pas en contact les uns avec les autres.

Le corps 227 de la structure 222 comporte un espace commun à tous les éléments d'échange de sorte à permettre aux éléments d'échange de s'emboîter latéralement les uns dans les autres. Sur le bord extérieur de cet espace est conformé pour correspondre aux contours extérieurs des éléments d'échange les plus extérieurs.

En considérant des éléments d'échange à double hélice 28, en prévoyant un décalage d'un-demi pas le long de la direction longitudinale entre deux éléments d'échange adjacente et un décalage comprise entre 0,55 et 0,75 fois le diamètre des éléments d'échange dans un plan perpendiculaire à la direction longitudinale, ceux-ci peuvent être emboités latéralement.

La plus grande partie des chemins d'écoulement des fluides F1 et F2 est donc définie entre deux éléments d'échange.

Les éléments d'échange sont préassemblés avant le montage dans le corps de la structure.

Cette configuration présente l'avantage d'offrir une grande compacité.

Il sera compris qu'un échangeur comportant un seul élément d'échange 28, pour lequel la virole délimiterait directement le canal fluidique ne sort pas du cadre de la présente invention.

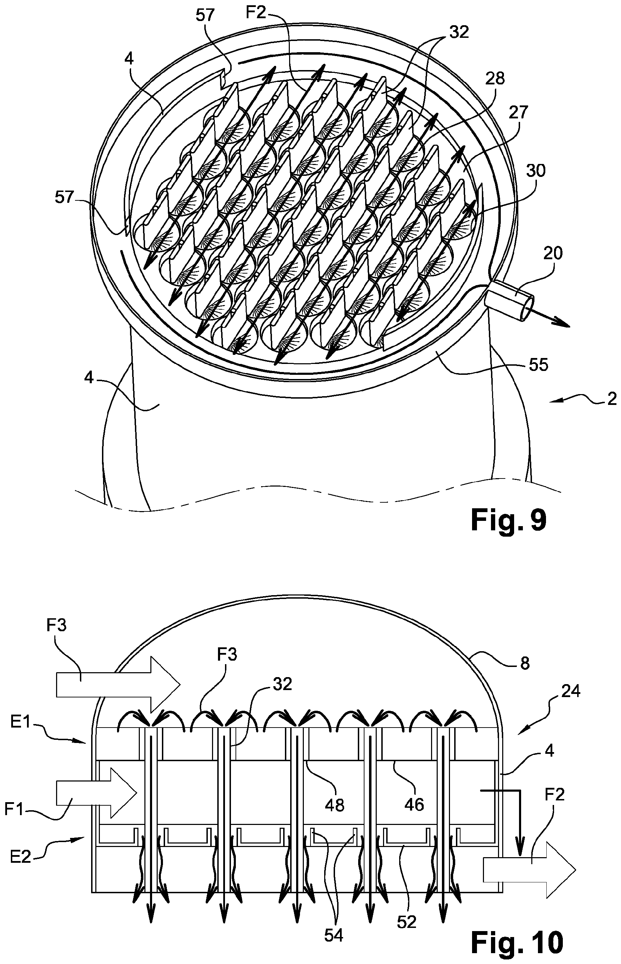

Les distributeurs-collecteurs 24 et 26 vont maintenant être décrits à l'aide des figures 9 à 11B.

Les distributeurs-collecteurs des figures 9 à 11B sont particulièrement adaptés lorsque le fluide F1 est un liquide destiné à ruisseler sur la surface de l'élément d'échange 28 et le fluide F2 est un fluide gazeux qui peut être ou non un mélange gazeux.

Les distributeurs-collecteurs 24, 26 sont particulièrement adaptés à une alimentation en liquide F1 par le haut et en une alimentation en gaz F2 par le bas. En outre, le caloporteur F3 est alimenté par le haut de l'échangeur. L'échangeur peut également fonctionner avec une alimentation en gaz F2 par le haut, néanmoins lune configuration d'échange à co-courant est en général moins efficace qu'une configuration d'échange à contre-courant.

Sur les figures 9 et 10, on peut voir le distributeur-collecteur 24 supérieur. Les références F1, F2 et F3 désignent l'écoulement des fluides F1, F2 et F3.

Sur la figure 10, on peut voir le distributeur-collecteur 24 comportant un plateau ou étage EI destiné à alimenter l'intérieur des éléments d'échange 28 avec le caloporteur et un plateau ou étage E2 destiné à l'alimentation en liquide F1 et en collecte du fluide gazeux F2. Il est à noter que les concentrations des éléments composant les fluides F1 et F2 peuvent varier entre l'injection des fluides F1 et F2 et leur collecte. Mais à des fins de simplicité les fluides destinés à entrer en contact l'un avec l'autre le long des éléments d'échange 28 seront toujours désignés F1 et F2.

Les plateaux E1 et E2 sont séparés l'un de l'autre de manière étanche de sorte à éviter tout mélange entre le caloporteur F3 et les fluides F1 et F2.

Le plateau EI est dans l'exemple représenté situé en partie supérieure du distributeur-collecteur 24. Le plateau EI comporte un fond 46 percé de passages 48 traversés par des connecteurs d'alimentation 32 aux canaux hélicoïdaux 44 internes aux éléments d'échange 28. Dans l'exemple représenté, les connecteurs 32 ont une forme de plaque parallèle à l'axe longitudinal et de dimension transversale égale au diamètre des éléments d'échange 28 et les passages sont formés par des rainures.

Dans l'exemple représenté, les extrémités libres des connecteurs 32 font saillie du fond 46 et les canaux hélicoïdaux 44 sont alimentés par débordement comme le symbolisent les flèches F3. Une nappe de liquide alimentée par le connecteur 12 se forme autour et entre la forêt des extrémités libres de connecteurs 32. Cette alimentation assure une alimentation uniforme de tous les canaux hélicoïdaux 44.

Comme on peut le voir sur les figures 1A et 1B, l'alimentation en caloporteur F3 se fait par exemple dans le fond supérieur au niveau de l'axe longitudinal X.

En variante, les extrémités libres des connecteurs 32 pourraient affleurer le fond 46.

Le plateau E2 qui est visible de dessus sur la figure 9, permet d'une part l'alimentation en fluide F1 et d'autre part la collecte du fluide F2.

Le plateau comporte un fond 52 muni également des passages 54 pour les connecteurs 32 afin qu'ils puissent atteindre le plateau El. Les passages sont en forme de rainures rectilignes présentant une largeur supérieure à celles des connecteurs de sorte à ménager un passage entre les bords des rainures 54 et les connecteurs 32, permettant l'écoulement du fluide F1 par gravité en direction de la structure.

De manière avantageuse, les rainures sont bordées par un rebord 54 de sorte que l'écoulement de fluide F1 se fasse par débordement. Comme on peut le voir sur les figures 1A et 1B, l'alimentation en fluide F1 se fait par exemple latéralement. De préférence, les rainures 54 et les connecteurs 32 n'atteignent pas la virole de sorte à permettre au fluide F1 de se répartir sur tout le fond 52 et ainsi alimenter de manière uniforme tous les éléments d'échange 28. Le fluide F1 s'écoule le long des connecteurs 32 à l'extérieur de ceux-ci jusqu'au surfaces hélicoïdales supérieures 36.1, 36.2 et ruisselle tout le long des éléments d'échange 28. Cette alimentation assure une alimentation uniforme des tous les éléments d'échange et une alimentation uniforme sur toute la surface extérieure de chaque élément d'échange 28.

La collecte du fluide gazeux F2 se fait en dessous du fond 52. De manière avantageuse, un canal annulaire 55 de collecte du fluide F2 est réalisé autour de la virole juste en dessous du fond 46, permettant une collecte uniforme du fluide F2 et une faible perte de charge.

Comme on peut le voir sur la figure 9, la virole comporte au moins une fenêtre 57 pour l'écoulement du fluide F2 de l'intérieur de la virole vers le canal annulaire 55. De manière avantageuse, plusieurs fenêtres 57 sont prévues et sont réparties de manière uniforme. En outre, elles sont avantageusement disposées de sorte que la direction du flux de fluide F2 soit parallèle aux connecteurs 32, ce qui permet une distribution homogène en limitant les pertes de charge. Dans l'exemple représenté, la virole 4 comporte deux fenêtres 57 diamétralement opposées et alignées dans une direction parallèle au plan des connecteurs 32.

Le connecteur 20 relie le canal annulaire à un système extérieur. Du fait de l'écoulement du fluide F1 par les rainures 54, une faible quantité de fluide gazeux s'écoule dans les rainures 54 au-dessus du fond 52. On peut prévoir néanmoins de manière avantageuse un connecteur pour collecter le fluide F2 se trouvant entre le fond 52 et le fond 46.

L'écoulement du fluide F2 par les rainures 54 provoque avantageusement un phénomène de bullage dans le fluide F1 ruisselant le long des éléments d'échange ce qui favorise le contact entre les fluides F1 et F2.

Il sera compris que le distributeur collecteur des figures 9 et 10 est un exemple de réalisation non limitatif. Par exemple, on pourrait prévoir une alimentation individuelle de chaque canal hélicoïdal 44 par exemple en connectant des tuyaux entre une source de caloporteur et les connecteurs 32. Dans ce cas, le plateau El pourrait être supprimé.

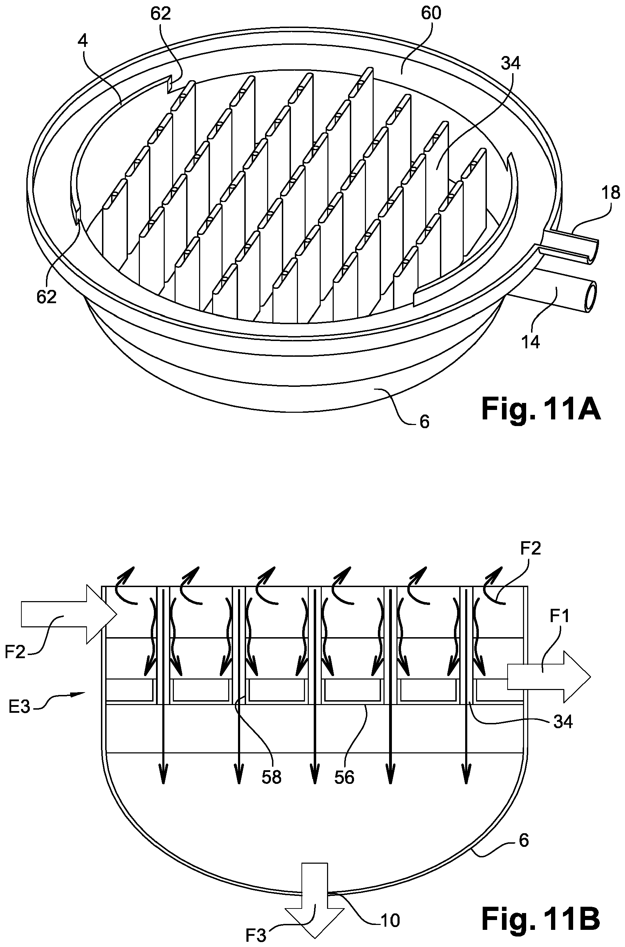

Sur les figures 1B, 11A et 11B, on peut voir un exemple de réalisation d'un distributeur collecteur inférieur 26. Le distributeur-collecteur 26 assure la distribution en fluide F2, la collecte du fluide F1 et permet la collecte du caloporteur F3.

Le distributeur-collecteur 26 comporte un plateau E3 muni d'un fond 56 percé de passages 58 pour le passage des connecteurs d'évacuation 34 des canaux hélicoïdaux 44 des éléments d'échange 28, ceux-ci rejetant le caloporteur dans le fond bombé duquel il est évacué par le connecteur 10. Les passages 58 sont, dans l'exemple représenté, également des rainures rectilignes. La traversée du fond 56 par les connecteurs d'évacuation 34 est étanche. L'étanchéité est réalisée par exemple par une ou des brasures et/ou une ou des soudures.

Le fluide F1 s'écoulant des surfaces supérieures 36.1, 36.2 des éléments d'échange est récolté sur le fond 56 et peut être collecté par un connecteur latéral. Le fluide F2 est alimenté au-dessus du fond 56 et au-dessous de la structure. De manière avantageuse, un canal annulaire 60 d'alimentation en fluide F2 est réalisé autour de la virole juste en dessous de la structure 22, permettant une alimentation homogène des canaux fluidiques et avec une faible perte de charge. Un connecteur permet de relier le canal annulaire 60 à une source de fluide F2.

Sur la figure 11A, on peut voir une vue en coupe transversale le long du plan P2 au niveau du distributeur-collecteur 26. Comme pour la collecte du fluide F2, la virole comporte avantageusement au moins une fenêtre 62 au droit du canal annulaire 60. De manière avantageuse, plusieurs fenêtres 62, sont prévues et sont réparties de manière uniforme. Dans l'exemple représenté, deux fenêtres 62 diamétralement opposées sont prévues. En outre elles sont avantageusement disposées de sorte que le flux de fluide F2 soit parallèle aux connecteurs 32. Cette disposition permet une distribution homogène en limitant les pertes de charge.

De manière naturelle le fluide F2 va se répartir de manière uniforme sous toute la structure et s'écouler dans les canaux fluidiques le long des surfaces des éléments d'échange entrant en contact avec le fluide F1 ruisselant.

Les emplacements des connecteurs dans la virole et dans les fonds bombés sont avantageux car ils permettent de séparer simplement et efficacement les écoulements du caloporteur et des fluides F1 et F2, mais ils ne sont pas limitatifs.

En variante, le distributeur-collecteur inférieur 26 pourrait reprendre une structure proche du distributeur-collecteur 24. Il comporterait deux plateaux, le plateau supérieur collecterait le fluide F1 qui ruisselle des éléments d'échange et le plateau inférieure collecterait le caloporteur, les connecteurs 34 débouchant dans le plateau inférieur. Le fond du plateau supérieur serait alors traversé de manière étanche par les connecteurs 34. Le fluide F2 serait alimenté via le plateau supérieur.

En variante, le caloporteur pourrait circuler du bas vers le haut de l'échangeur dans la représentation de la figure 1B.

En variante, on pourrait collecter le caloporteur au moyen de tuyaux connectés directement aux connecteurs d'évacuation 34, le fond 56 ne serait alors plus requis et le fluide F1 s'écoulerait dans le fond bombé et serait collecté par le connecteur 10.

Le principe de fonctionnement de l'échangeur selon l'invention va maintenant être décrit en considérant un liquide F1 et un gaz ou un mélange gazeux F2.

Une circulation de caloporteur F3 dans les canaux hélicoïdaux 44 des éléments d'échange 28 est établie en alimentant le plateau El du distributeur-collecteur 24. Le caloporteur par débordement se répartit dans tous les éléments d'échange 28 et s'écoulent dans les canaux hélicoïdaux 44.

Ensuite, le plateau E2 est alimenté en liquide F1 qui, par débordement ruisselle sur les surfaces supérieures 36.1, 38.1 des hélices 36, 38 des éléments d'échange 28.

Le gaz 2 alimente le distributeur-collecteur inférieur 26 qui va alors se distribuer dans les canaux fluidiques et s'écoule le long des chemins hélicoïdaux délimités par les hélices 36, 38 de chacun des éléments d'échange, en direction du distributeur-collecteur supérieur 24.

Comme cela est schématisé sur la figure 5A, le liquide F1 et le gaz F2 entrent en contact le long des chemins hélicoïdaux. En outre des échanges de chaleur ont lieu entre le liquide F1 et le caloporteur F3 et entre le gaz F2 et le caloporteur F3 à travers l'élément d'échange 28.

Il y a par exemple un phénomène d'absorption ou désorption entre le liquide F1 et le gaz F2 ou une réaction chimique, le phénomène d'absorption ou désorption ou la réaction chimique étant assistée par les échanges thermiques avec le caloporteur. S'il s'agit d'une réaction exothermique, un caloporteur relativement froid s'écoule dans les éléments d'échange pour extraire de la chaleur, et s'il s'agit d'une réaction endothermique, un caloporteur relativement chaud s'écoule dans les éléments d'échange 28.

Sur la figure 5B, on peut voir schématisées les zones d'échanges thermiques dans le cas décrit ci-dessus. Les zones désignées A sont le lieu d'échanges thermiques entre le liquide F1 et le caloporteur. Ces échanges se font par conduction à travers la paroi de l'élément d'échange, et éventuellement par convection dans le canal hélicoïdal 44 et sur la face extérieure de l'élément d'échange.

Les zones désignées B sont le lieu d'échanges thermiques entre le gaz F2 et le fluide caloporteur. Ces échanges se font par conduction à travers la paroi de l'élément de transfert, et éventuellement par convection dans le canal hélicoïdal 44 et sur la face extérieure de l'élément d'échange.

Les zones désignées C sont le lieu d'échanges entre le liquide F1 et le gaz F2.

Le caloporteur F3 traverse les éléments d'échange 28 et est collecté dans le fond bombé, il peut alors être renvoyé dans le distributeur-collecteur 24 après avoir été refroidi ou réchauffé suivant les échanges requis.

Le liquide F1 est collecté dans le plateau E3 du distributeur-collecteur 26 en vue de son utilisation ou retraitement et le gaz F2 est collecté dans le distributeur-collecteur 24 en vue de son utilisation ou retraitement.

Du fait des chemins le long desquels le contact entre les fluides F1 et F2 ont lieu, le temps passé dans l'échangeur par les fluides F1 et F2 est sensiblement augmenté par rapport aux échangeurs de l'état de la technique, ce qui favorise les phénomènes et/ou échanges entre les fluides F1 et F2. En outre, les échanges thermiques sont assurés tout le long des chemins, ce qui permet d'optimiser l'efficacité des phénomènes et/ou réactions entre les fluides F1 et F2.

Il sera noté que le sens de circulation des fluides n'est pas limitatif. En effet, le caloporteur F3 pourrait être alimenté à partir du bas de l'échangeur. En outre, on pourrait faire circuler les fluides F1 et F2 à co-courant. Par exemple dans le cas où les fluides F1 et F2 seraient deux liquides, ils pourraient tous les deux ruisseler sur la surface extérieure des éléments d'échange du haut vers le bas, ou dans le cas où les fluides F1 et F2 seraient tous les deux gazeux, ils pourraient être injectés dans la structure à partir du bas. Les distributeurs-collecteurs seraient adaptés. Comme mentionné plus haut, une alimentation en gaz par le haut et une circulation des fluides Flet F2 à co-courant est envisageable.

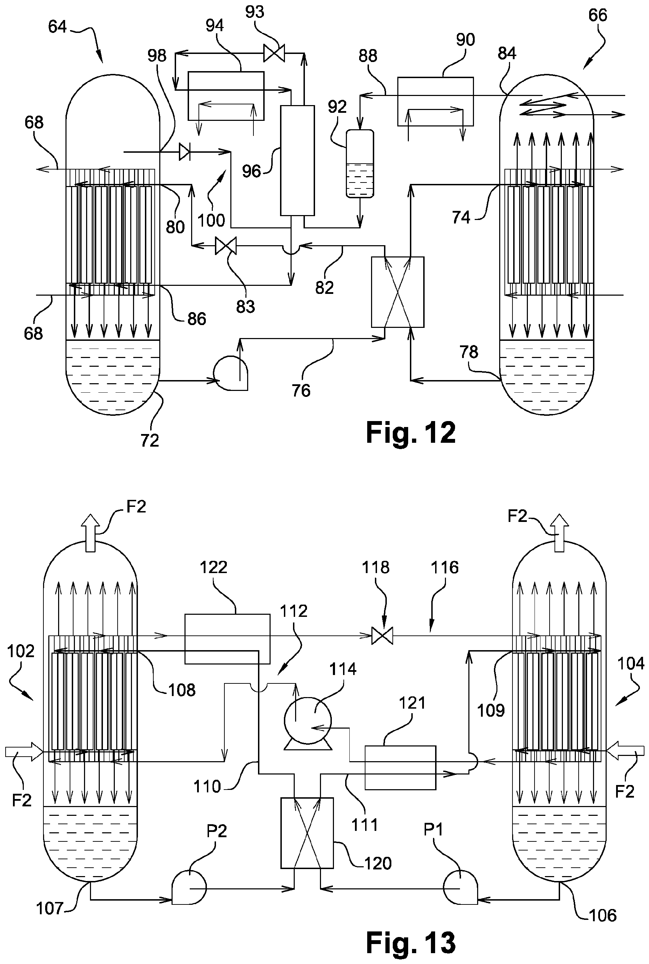

Comme cela sera décrit en relation avec la figure 12, le fluide caloporteur F3 ou le fluide F1 peuvent être collectés directement dans le fond de l'enceinte. De manière très avantageuse, le fond de l'enceinte du désorbeur et le fond de l'enceinte de l'absorbeur peuvent alors formés des réservoirs tampons permettant de compenser la variation éventuelle de la quantité de fluide nécessaire au bon fonctionnement du cycle. En outre des organes des systèmes mettant en oeuvre l'échangeur selon l'invention pourraient être intégrés dans l'enceinte de l'échangeur, par exemple un séparateur ou un autre échangeur. Une telle intégration permet de réduire les tuyauteries, les connecteurs et les organes de commande et de contrôle.

Dans le cas d'un échangeur utilisé comme désorbeur, l'échangeur selon l'invention permet d'intégrer un rectificateur dans la partie haute de l'enceinte 2, pour condenser par exemple l'eau résiduelle dans la vapeur de $NH_3$.

En outre, grâce à l'échangeur selon l'invention, le temps de séjour des fluides que l'on souhaite mettre en contact est augmenté.

De plus, les surfaces d'échange avec le caloporteur sont avantageusement augmentées par rapport à un échangeur à plaques.

En outre, elle offre une grande compacité puisqu'elle offre une grande surface d'échange entre les fluides à mettre en contact par rapport au volume de l'échangeur.

L'échangeur peut permettre, par exemple grâce aux distributeurs-collecteurs intégrés dans l'enceinte de simplifier les installations en réduisant les tuyauteries, les connexions et/ou les organes de commande. Grâce au distributeur-collecteur à débordement, le caloporteur et le fluide F1 sont distribués de manière uniforme avec le même débit dans tous les éléments d'échange. Les pertes de charge hydrauliques et aérauliques peuvent être réduites.

La structure d'échange étant reçue dans une enceinte et la distribution et collecte des fluides pouvant être sensiblement simplifiée, les risques de fuite peuvent être réduits de manière importante, ainsi que la maintenance.

Le coût de revient de l'échangeur peut donc être réduit, ainsi que celui lié à l'exploitation de l'échangeur du fait des pertes de charge réduites.

Sur la figure 12, on peut voir un exemple de système mettant en oeuvre la présente invention. Le fluide F1 est une solution absorbante, par exemple un mélange d'eau liquide et d'ammoniac et le fluide F2 contient un sorbat, par exemple de l'ammoniac gazeux $NH_3$, destiné à être absorbé par la solution absorbante. Le fluide F1 sera désigné fluide enrichi en sortie de l'absorbeur et fluide appauvri en sortie du désorbeur.

Dans l'absorbeur le mélange liquide d'eau plus ammoniac s'enrichit en $NH_3$ et dans le désorbeur le mélange liquide s'appauvrit en $NH_3$.

Le système de la figure 12 est une machine thermique à absorption comportant un absorbeur 64 et un désorbeur 66. L'absorbeur et le désorbeur comportent chacun un échangeur selon l'invention.

Dans l'exemple représenté et de manière avantageuse, les deux échangeurs ont sensiblement la même structure.

Dans cet exemple, le fluide enrichi F1 est collecté dans le fond de l'absorbeur 64 et le fluide appauvri F1 est collecté dans le fond du désorbeur 66. Le caloporteur est directement récupéré des connecteurs 34 des éléments d'échange 28. La structure de l'absorbeur et du désorbeur 64 et 66 diffère donc de celle de l'échangeur des figures 1A et 1B.

Une source froide (non représentée) alimente en caloporteur les éléments d'échange 28 de l'absorbeur 64 par un circuit 68.

Une source chaude (non représentée) alimente en caloporteur les éléments d'échange 38 du désorbeur 66 par un circuit 70.

Un connecteur 72 de collecte du fluide enrichi F1 dans le fond de l'absorbeur 64 est connecté à un connecteur d'alimentation 74 en fluide F1 dans la partie supérieure du désorbeur 66 par un circuit 76.

Le connecteur de collecte 78 du fluide appauvri F1 est connecté au connecteur d'alimentation 80 en fluide F1 de l'absorbeur 64 par un circuit 82. Le circuit 82 comporte un détendeur 83. Avantageusement un échangeur thermique est prévu entre les circuits 76 et 82 pour transférer de la chaleur du fluide appauvri F1 au fluide enrichi F1, ce qui permet de réduire l'apport en chaleur requis.

Un connecteur de collecte 84 du fluide F2 qui est désorbé dans le désorbeur 66 dans la partie supérieure du désorbeur est connecté au connecteur d'alimentation 86 de l'absorbeur par un circuit 88. Le circuit 88 comporte un condenseur 90 du fluide F2, un séparateur 92, un détendeur 93 et un évaporateur 94. De manière avantageuse, un sous-refroidisseur 96 est prévu dans le circuit 88 entre une portion du circuit 88 en amont de l'évaporateur et une portion du circuit 88 en aval de l'évaporateur 94. Le sous-refroidisseur assure un échange thermique entre le condensat sortant du condenseur et la vapeur issue de l'évaporateur. Un refroidissement précède donc l'évaporateur et génère un sous-refroidissement dans l'évaporateur, i.e. une augmentation de la puissance frigorifique, mais également une quantité de chaleur supplémentaire à évacuer dans l'absorbeur.

Un connecteur 98 permet de récupérer le fluide F2 résiduel dans la partie supérieure de l'absorbeur qui n'aurait pas été absorbé par le fluide F1. Le connecteur 98 est relié à un circuit 100 connecté au connecteur 86, par exemple en aval du sous-refroidisseur pour réinjecter le fluide F2 récupéré dans l'absorbeur.

Le fonctionnement de la machine thermique de la figure 12 va maintenant être décrit. Le cycle thermodynamique ne sera pas décrit, celui-ci étant connu de l'homme du métier. Considérons le mélange liquide eau + ammoniac comme fluide F1 et le mélange gazeux d'ammoniac comme fluide F2.

Dans le désorbeur, le caloporteur chaud F3 circule dans les canaux hélicoïdaux 44 des éléments d'échange

EP 3 246 651 B1

28. L'eau enrichie en ammoniac s'écoule sur les surfaces hélicoïdales des éléments de transfert 28, l'eau enrichie en ammoniac est échauffée et le ammoniac contenu dans l'eau est vaporisé, le titre d'ammoniac liquide dans l'eau diminue.

L'ammoniac collecté en haut du désorbeur 66, est condensé dans le condenseur à une certaine pression supérieure à la pression atmosphérique, cette pression est la pression haute du système.

L'ammoniac est détendu jusqu'à la pression basse du système qui est inférieure à la pression haute et supérieure à la pression atmosphérique, et est ensuite vaporisé dans l'évaporateur en absorbant une certaine quantité de chaleur.

L'ammoniac vapeur issu de l'évaporateur est injecté dans le bas de l'absorbeur et circule le long des surfaces hélicoïdales 36.1, 38.1 des éléments d'échange 28, l'eau appauvrie sortant du désorbeur s'écoule sur les surfaces hélicoïdales 36.1, 38.1 des éléments de transfert. L'ammoniac est absorbé, ce qui produit de la chaleur. Un caloporteur froid circule dans les éléments d'échange 28, ce qui améliore l'absorption. Si tout l'ammoniac n'a pas été absorbé par le mélange ruisselant, l'ammoniac est collecté en partie supérieure de l'absorbeur et réinjecté dans le bas de l'absorbeur.

L'eau enrichie est ensuite réinjectée dans le désorbeur.

Sur la figure 13, on peut voir un autre exemple de système mettant en oeuvre la présente invention. Le système de la figure 13 est destiné au traitement de l'air et plus généralement d'un fluide gazeux. Il peut s'agir d'un système de traitement de l'air d'un bâtiment. A des fins de simplicité, le système sera décrit dans son application au traitement de l'air.

Le système comporte deux échangeurs selon l'invention, l'un 102 formant un désorbeur et l'autre 104 formant un absorbeur.

Un connecteur 106 de collecte du fluide enrichi F1 dans le fond de l'absorbeur 104 est connecté au connecteur d'alimentation 108 en fluide F1 dans la partie supérieure du désorbeur 102 par un circuit 110. Une pompe P1 peut être prévue dans le circuit 110.

Un connecteur 107 de collecte du fluide appauvri F1 dans le fond du désorbeur 102 est connecté au connecteur d'alimentation 109 en fluide F1 dans la partie supérieure de l'absorbeur 104 par un circuit 111. Une pompe P2 peut être prévue dans le circuit 11.

Le fluide F1 est destiné à ruisseler sur les surfaces hélicoïdales 36.1, 38.14 des éléments d'échange 28.

Un circuit 112 assure un cycle de compression d'un fluide frigorigène F3.

Le circuit 112 collecte le fluide frigorigène dans la partie inférieure des canaux hélicoïdaux 44 des éléments d'échange 28 de l'absorbeur 104 et injecte le fluide frigorigène sous pression dans la partie inférieure des canaux hélicoïdaux 44 des éléments d'échange 28 du désorbeur. Un compresseur 114 est prévu dans le circuit 112.

Le système comporte un circuit 116 connectant les connecteurs 32 des canaux hélicoïdaux 44 des éléments d'échange 28 du désorbeur 102 aux connecteurs 32 des canaux 44 des éléments d'échange 28 de l'absorbeur 104. Un détendeur 118 est prévu dans le circuit 116.

Avantageusement un échangeur thermique 120 est prévu entre le circuit 110 et le circuit 112.

Avantageusement également, un échangeur thermique 121 ou surchauffeur est prévu entre le circuit 111 et le circuit 112 en amont du compresseur 114.

Avantageusement un échangeur thermique 122 est prévu entre le circuit 110 et le circuit 116 en amont du détendeur 118.

L'absorbeur est alimenté en air chaud et humide qui s'écoule à partir du bas le long des surfaces hélicoïdales 36.1, 38.1 des éléments d'échange 28 et le désorbeur 102 est alimenté en air vicié qui s'écoule à partir du bas le long des surfaces hélicoïdales 36.1, 38.1 des éléments d'échange 28 du désorbeur 102.

Le fonctionnement du système de traitement d'air va maintenant être décrit.

Le fluide F2 est formé par l'air.

Le fluide frigorigène F3 forme la source froide dans l'absorbeur et la source chaude dans le désorbeur. Dans l'exemple représenté sur la figure 13 et de manière avantageuse, le fluide frigorigène F3 et le fluide F2 circulent à contre-courant dans les structures mais ceci n'est pas limitatif, mais un système tel qu'une circulation à co-courant dans l'absorbeur et/ou le désorbeur soit établie ne sort pas du cadre de la présente invention

Les canaux des éléments d'échange du désorbeur sont alimentés en fluide frigorigène à haute pression sous forme vapeur et les canaux des éléments d'échange de l'absorbeur sont alimentés en fluide frigorigène à basse pression sous forme liquide

Le désorbeur est alimenté en air vicié F2, prélevé dans le bâtiment, dans la partie inférieure de la structure, celui-ci circule dans les canaux fluidiques. Il entre en contact avec l'eau ruisselant sur les surfaces hélicoïdales 36.1, 38.1 des éléments d'échange 28, il se charge en vapeur d'eau et est en outre échauffé par échange thermique avec le frigorigène circulant dans les canaux hélicoïdaux 44 des éléments d'échange 28.

De l'air vicié chargé en vapeur d'eau et dont la température a augmentée sort de la structure et du désorbeur.

Simultanément, de l'air neuf prélevé de l'extérieur pour être introduit dans le bâtiment, alimente l'absorbeur 104 et circule dans les canaux fluidiques, se décharge de son humidité au contact du fluide F1 par absorption. En outre l'air est rafraîchi par échange thermique avec le frigorigène circulant dans les canaux hélicoïdaux 44.

Contrairement à la machine thermique de la figure 12 dans laquelle le fluide F2 circule en boucle fermée entre les deux échangeurs, chaque échangeur du système de traitement de la figure 13 possède une entrée et une sortie pour le fluide F2.

Grâce à l'invention, dans l'absorbeur du système de traitement de l'air neuf, les échanges thermiques avec le frigorigène servent à la fois à favoriser l'absorption de la vapeur d'eau par le fluide F2 ruisselant et à refroidir l'air.

L'élément d'échange selon l'invention peut être fabriqué selon différentes méthodes :

L'élément d'échange 28 est réalisé de sorte à offrir une certaine tenue en pression et être résistant à la corrosion.

Il peut être réalisé en utilisant une technique de ferronnerie.

Par exemple on peut partir d'un tube plat rempli de sable. Une extrémité du tube est maintenu entre une première paire de mâchoires fixes en rotation et en translation et une extrémité est maintenue entre une deuxième paire de mâchoires fixes en translation et aptes à tourner autour d'un axe coaxial à l'axe longitudinal du tube.

Le tube est de préférence chauffé et un couple important est imposé à la deuxième paire de mâchoires de manière à réaliser les torsades sur le tube. Lorsque le nombre de torsade voulu est obtenu, le tube est refroidi par palier de température de manière à maîtriser les contraintes de dilatation. Le sable est ensuite enlevé de l'intérieur du tube, par exemple en injectant un fluide sous pression, de préférence de l'eau. En variante, de l'air peut être injecté.

Des post-traitements peuvent être appliqués au tube afin de s'assurer de la bonne tenue mécanique et de la résistance à la corrosion de la structure. Les connecteurs 32 et 34 peuvent être réalisés d'un seul tenant avec le tube ou être rapportés sur le tube torsadé par exemple par soudage.

En variante, les éléments d'échange peuvent être réalisés par une méthode d'impression d'objet en métal, telle que le frittage laser de poudre métallique.

Des post traitements sont également envisageables afin de s'assurer de la bonne tenue mécanique et de la résistance à la corrosion de la structure. Les connecteurs 32 et 34 peuvent être réalisés d'un seul tenant avec le tube ou être rapportés sur le tube torsadé par exemple par soudage.

On peut envisager de réaliser les éléments d'échange par usinage de chaudronnerie et soudage, néanmoins cette technique présente un coût relativement important. Ils peuvent être réalisés par fonderie, en utilisant le moulage sable et l'injection de métal liquide. Ce procédé s'applique à la fabrication pour la petite série.

La structure d'échange 22 peut être réalisé par un procédé d'extrusion par exemple de polymère ou de métal. En variante, elle peut être fabriquée d'autres procédés de fabrication tels que l'injection ou l'usinage par exemple.

Les distributeurs-collecteurs sont réalisés par exemple par découpe, pliage et éventuellement soudage ou brasage...

Les éléments d'échange sont ensuite montés dans les canaux fluidiques de la structure d'échange qui est elle-même montée dans une enceinte, qui ne comporte pas de fond supérieur, le fond supérieur étant solarisé à la virole après mise en place de la structure. Les distributeurs-collecteurs inférieur et supérieur peuvent être connectés aux éléments d'échange et à la structure d'échange avant le montage dans la virole. Les étanchéités entre les connecteurs et les plateaux sont réalisées de préférence par soudage.

Des exemples de dimensionnement d'un échangeur selon l'invention vont maintenant être donnés en considérant l'élément d'échange 28 à double hélice de la figure 5A.

Pour le dimensionnement il est tenu compte du fait que :

- l'épaisseur de film liquide ruisselant est supérieure à l'épaisseur de film critique. L'épaisseur de film critique correspond à l'épaisseur minimum en dessous de laquelle la largeur de la zone d'écoulement du fluide F1 n'est pas entièrement recouverte par le fluide F1,
- Le débit linéique de la solution liquide est fixé pour être supérieur ou égal au débit linéique critique qui correspond au débit minimum pour que le film de fluide F1 recouvre la surface d'échange de l'échangeur dans son intégralité. L'épaisseur critique du film liquide correspond à l'épaisseur minimale en dessous de laquelle les surfaces 36.1 et 38.1 ne sont pas entièrement couvertes sur toute leur largeur par le fluide F1.

Par exemple, l'épaisseur de film critique est par exemple de 0,2 mm et le débit linéique critique est égal à 0,06 kg/m.s.

Dans l'échangeur selon l'invention, la surface d'échange totale est la suivante : Stot=Circonférence d'une spire×largeur du film×Nombre de révolutionxNombre d'échangeur.

Le film ruisselant s'écoulant uniquement sur les surfaces supérieures 36.1 et 38.1, seules celles-ci sont prises en compte.

Dans cet exemple, l'échangeur est composé de N éléments d'échange 28 présentant la surface totale *Stot,* qui est la surface totale disponible pour le ruissellement de la solution pauvre F1. Chaque élément d'échange 28 a un nombre de révolution égal à *Nrev.* Sur chaque élément d'échange 28 sont distribués deux films ruisselants chacun de largeur (r2-rl) et d'épaisseur $\delta$. R2 est le rayon extérieur de l'élément d'échange et r1 est le rayon du noyau.

Le temps de séjour de chaque film ruisselant sur chaque élément d'échange est t. Le volume total de solution liquide présent dans l'échangeur est désigné V.

*Vtot* est l'encombrement total de l'échangeur et H est la hauteur de l'échangeur.

Le système d'équation suivant doit être respecté par l'échangeur :

$$t = \frac{\delta^{1/3} \times \rho \times \text{Stot}}{m}$$

$$Stot = 2 \times \pi \times 2 \times r2 \times \sqrt{(1+(\tan\alpha)^2)} \times Nrev \times N \times (r2-r1) \times 2$$

$$\tan(\alpha) = \frac{\frac{H}{Nrev}}{4 \times r2} = \frac{Vtot}{Nrev \times N \times 4 \times \pi \times r2^3}$$

$$Re = \frac{\rho\text{eau} \times \text{v} \times \text{Dh}}{\mu\text{eau}} = \frac{2 \times \text{Qw}}{\pi \times \mu eau \times N \times r1} \times \left(\frac{r2 - r1}{r2}\right)$$

La résolution de ce système permet d'obtenir le nombre d'éléments d'échange 28 dans l'échangeur, le nombre de révolutions de chaque élément d'échange et les r1 et r2 de élément d'échange en fonction de paramètres tels que la surface d'échange, l'encombrement total, l'angle de la spirale ou le temps de séjour.

Le nombre de Reynolds est fixé à 2300 pour être sûr d'être en régime turbulent dans l'écoulement du liquide de refroidissement. L'angle de la spirale est fixé à 15°. Le fluide caloporteur est, dans cet exemple, de l'eau.

| | r2(m) | r1(m) | N | Nrev | Sto (m$^2$) | Vtot(m$^3$) | H(m) | Débit linéique (kg/m.s) | Epaisseur de film (m) | t(s) |
|---|---|---|---|---|---|---|---|---|---|---|
| ECH1 | 0,2167 | 0,00680 | 10,2 | 8,5 | 0,7242 | 0,00296 | 0,198 | 0,05490 | 0,000244 | 9 |
| ECH2 | 0,01846 | 0,00767 | 7,7 | 18,2 | 0,7242 | 0,002963 | 0,361 | 0,1024 | 0,000298 | 11 |
| ECH3 | 0,01026 | 0,00345 | 19,4 | 28,4 | 1, | 0,002 | 0,312 | 0,06285 | 0,000255 | 13 |
| ECH4 | 0,00968 | 0,00362 | 17,4 | 37,6 | 1 | 0,002 | 0,390 | 0,07849 | 0,000274 | 14 |
| ECH5 | 0,00913 | 0,00374 | 15,9 | 49,0 | 1 | 0,002 | 0,480 | 0,09654 | 0,000294 | 15 |

A tire de comparaison, un échangeur à plaques de l'état de la technique ayant une Stot de 0,7242 m$^2$ ; un Vtot de 0,00296 m$^3$ et une hauteur de 0,526 m, a un débit linéique de 0,01067, une épaisseur de film de 0,000141 m et un temps de séjour de 0,4s.

On constate que pour une même surface d'échange Stot et un même encombrement total Vtot, les échangeurs ECHlet ECH2 selon l'invention présentent un temps de parcours sensiblement plus long, 9 s et 11 s respectivement, contre 0,4 s dans l'échangeur à plaques.

Les échangeurs ECH3, ECH4 et ECH5 selon l'invention offrent une surface d'échange plus grande et un encombrement réduit et également un temps de séjour sensiblement allongé par rapport à l'échangeur à plaques, et permet un débit linéique et une épaisseur de film supérieurs.

Les dimensionnements ont été réalisés pour un échangeur comportant des éléments d'échange à double hélice. En considérant les éléments d'échange des figures 6A et 6B, les surfaces développées seraient supérieures, par exemple la surface développée serait multipliée par un facteur 1,5 pour l'élément en Y de la figure 6A et par un facteur 2 pour l'élément en croix de la figure 6B, par rapport à l'élément de la figure 5A pour un même encombrement de l'échangeur. Ou pour une même surface développée, l'encombrement de l'échangeur pourrait être réduit.

La présente invention permet donc de combiner à la fois les avantages d'un échangeur à plaques, i.e. une grande surface d'échange, et un faible encombrement avec des temps de séjour plus longs et des épaisseurs de films et des débits linéiques plus importants.

Si on considère un paramètre de temps de séjour par m$^2$ de surface d'échange par débit de solution absorbante (s$^2$/kg/m$^2$), la présente invention offre une très bonne performance. En effet, un temps de séjour important permet de s'assurer d'un rendement d'absorption efficace. Il peut par exemple être envisagé de supprimer le système de recirculation du gaz qui peut être mis en oeuvre dans certaines applications du fait du rendement d'absorption trop faible.

De plus, contrairement aux échangeurs à plaque, l'échangeur selon l'invention permet un échange thermique direct entre le gaz et le fluide caloporteur. Dans les échangeurs à plaques, le liquide ruisselant s'interpose entre le gaz et la plaque dans laquelle circule le caloporteur.

Comme cela a été expliqué ci-dessus, l'échangeur selon l'invention permet la mise en contact, pendant un temps rallongé, d'au moins deux fluides à contre-courant ou à co-courant, par exemple en vue d'un phénomène d'absorption ou de désorption ou d'une ou de plusieurs réactions chimiques entre les fluides, le traitement des polluants dans des solutions ou gaz tels que les fumées, tout en permettant un contrôle thermique des fluides. L'échangeur offre alors un rendement sensiblement augmenté par rapport aux échangeurs de l'état de la technique. Plus généralement l'échangeur selon l'invention peut être mis en oeuvre dans tout procédé de génie chimique faisant appel à des réactions d'absorption/désorption nécessitant un management thermique optimisé.

**Revendications**

**1.** Echangeur thermique à au moins trois fluides, comportant une enceinte, des premiers moyens d'alimentation et d'évacuation d'un premier fluide, des deuxièmes moyens d'alimentation et d'évacuation d'un deuxièmes fluide et des troisièmes moyens d'alimentation et d'évacuation d'un troisième fluide distincts les uns des autres, au moins un canal fluidique d'axe longitudinal (X) comprenant une première extrémité longitudinale et une deuxième extrémité longitudinale, et au moins un élément d'échange thermique (28) disposé dans le canal fluidique (30) dans l'enceinte, l'élément d'échange thermique (28) comportant :

- une zone d'absorption/désorption destinée à la mise en contact d'au moins le premier fluide (F1) et le deuxième fluide (F2),
- une zone de circulation du troisième fluide (F3), la zone d'absorption/désorption et le zone de circulation étant isolée de manière étanche l'une de l'autre,
- les premiers moyens d'alimentation et d'évacuation et les deuxièmes moyens d'alimentation et d'évacuation étant connectés à la zone d'absorption/désorption,
- les troisièmes moyens d'alimentation et d'évacuation étant connectés à la zone de de circulation,

**caractérisé en ce qu'**il comporte aussi :

- au moins une première paroi hélicoïdale comportant une première surface délimitant au moins en partie la zone d'absorption/désorption et sur une deuxième surface, opposée à la première surface, délimitant au moins en partie la zone de circulation,
- au moins une deuxième paroi hélicoïdale, la première paroi hélicoïdale et la deuxième paroi hélicoïdale étant reliées par un bord extérieur et délimitant entre elles la deuxième zone de circulation du troisième fluide (F3).

**2.** Echangeur thermique selon la revendication 1, comportant un noyau central longitudinal plein (33) autour duquel sont enroulées les première et deuxième parois hélicoïdales et auquel elles sont reliées de manière étanche délimitant un canal hélicoïdal (44) débouchant au niveau des première et deuxième extrémités longitudinales du canal fluidique, les premières parois hélicoïdales et les deuxièmes parois hélicoïdales étant avantageusement reliées au noyau central longitudinal (33) de sorte à définir au moins une double hélice.

**3.** Echangeur thermique selon la revendication 1 ou 2, dans lequel au moins la première surface et/ou la deuxième surface est structurée de sorte à augmenter la surface d'échange.

**4.** Echangeur thermique selon l'une des revendications 1 à 3, comportant une structure d'échange (22) comportant plusieurs canaux fluidiques (30) d'axes longitudinaux parallèles, et plusieurs éléments d'échange (28), chaque élément d'échange (28) étant monté dans un canal fluidique (30), des premiers, deuxièmes et troisièmes moyens de distribution et de collecte des premiers, deuxième et troisième fluides dans les canaux fluidiques (30) et les canaux hélicoïdaux (44), lesdits premiers, deuxièmes et troisièmes moyens de distribution et de collecte comportant au moins un distributeur-collecteur (24, 26) situé au-dessus ou au-dessous de la structure d'échange (22), l'échangeur thermique comportant également un distributeur-collecteur supérieur (24) situé au-dessus de structure d'échange (22) et un distributeur-collecteur inférieur (26) situé au-dessous de la structure d'échange (22), les distributeurs-collecteurs supérieur et inférieur (24, 26) étant tels qu'ils assurent l'alimentation et la collecte du troisième fluide (F3) circulant dans les canaux hélicoïdaux (44) et l'alimentation et la collecte de premier (F1) et deuxième (F2) fluides dans les canaux fluidiques (30).

**5.** Echangeur thermique selon la revendication 4, dans lequel les distributeurs-collecteurs inférieur (26) et supérieur (24) assurent une circulation à contre-courant du deuxième fluide (F2) par rapport au premier fluide (F1) et au troisième fluide (F3).

**6.** Echangeur thermique selon la revendication 5, dans lequel le premier fluide (F1) est un liquide et dans lequel le distributeur-collecteur supérieur (24) assure une alimentation des canaux fluidiques (30) avec le premier fluide (F1) par débordement, le premier fluide (F1) formant un film ruisselant sur la première surface.

**7.** Echangeur thermique selon la revendication 5 ou 6, dans lequel le troisième fluide (F3) est un liquide et dans lequel le distributeur-collecteur supérieur (24) assure une alimentation des canaux hélicoïdaux (44) par débordement.

**8.** Echangeur thermique selon l'une des revendications 5, 6 ou 7, dans lequel le deuxième fluide (F2) est un gaz et dans lequel le distributeur-collecteur inférieur (26) assure l'alimentation des canaux fluidiques (30) en deuxième fluide (F2) et la collecte du premier fluide (F1) et/ou du troisième fluide (F3).

**9.** Echangeur thermique selon la revendication 8, dans lequel l'enceinte comporte un fond inférieur collectant le premier fluide (F1) ou le troisième fluide (F3), et apte à former une réserve ou un réservoir tampon.

**10.** Echangeur thermique selon la revendication 9, dans lequel le distributeur-collecteur supérieur (24) assure la collecte du deuxième fluide (F2) et dans lequel le distributeur-collecteur supérieur (24) est tel que le deuxième fluide (F2) traverse le premier fluide (F1) dans le distributeur-collecteur supérieur (24) avant d'être collecté.

**11.** Echangeur thermique selon la revendication 10, comportant un canal entourant l'enceinte et sensiblement à l'aplomb du distributeur-collecteur supérieur (24), ledit canal étant destiné à la collecte du deuxième fluide par au moins une première fenêtre, avantageusement deux fenêtres, réalisée(s) dans l'enceinte et/ou un canal entourant l'enceinte et sensiblement à l'aplomb du distributeur-collecteur inférieur (26) et destiné à l'alimentation en deuxième fluide (F2), ledit canal étant destiné à la collecte du deuxième fluide (F2) par au moins une deuxième fenêtre, avantageusement deux fenêtres, réalisée(s) dans l'enceinte.

**12.** Echangeur thermique selon la revendication 11, et dans lequel les éléments d'échange (28) comportent des connecteurs à leurs extrémités longitudinales pour la circulation du troisième caloporteur (F3), lesdits connecteurs étant sensiblement plans et dans lequel l'enceinte les au moins première et deuxième fenêtres sont disposées de sorte que la collecte du deuxième fluide (F2) se fait parallèlement auxdits connecteurs.

**13.** Machine thermique à absorption comportant au moins un premier et un deuxième échangeur thermique selon l'une des revendications 1 à 12, le premier échangeur thermique étant destiné à fonctionner en absorbeur et le deuxième échangeur thermique étant destiné à fonctionner en désorbeur, et des circuits de connexion entre le premier et le deuxième échangeur thermique de sorte que le premier fluide collecté dans le premier échangeur thermique alimente le deuxième échangeur thermique, le premier fluide collecté dans le deuxième échangeur alimente le premier échangeur et le deuxième fluide collecté dans le deuxième échangeur thermique alimente le premier échangeur thermique, le circuit de connexion transportant le deuxième fluide comportant un évaporateur et avantageusement un condenseur, ladite machine thermique comportant au moins un troisième échangeur thermique entre les premiers fluides circulant entre le premier et le deuxième échangeur thermique, ladite machine thermique étant avantageusement destinée à utiliser un mélange d'eau liquide et de $NH_3$ et le deuxième fluide est du $NH_3$.et comme deuxième fluide du $NH_3$.

**14.** Système de traitement d'un fluide gazeux, le fluide gazeux étant le deuxième fluide, comportant :

- au moins un premier et un deuxième échangeur thermique selon l'une des revendications 1 à 12, le premier échangeur étant destiné à fonctionner en absorbeur et le deuxième échangeur étant destiné à fonctionner en désorbeur,
- des circuits de connexion entre le premier et le deuxième échangeur de sorte que :

• le premier fluide collecté dans le premier échangeur thermique alimente le deuxième échangeur thermique,
• le troisième fluide collecté dans le deuxième échangeur thermique alimente le premier échangeur thermique après avoir subi une détente, et
• le troisième fluide collecté dans le premier échangeur alimente le deuxième échangeur après avoir subi une compression.

**15.** Système de traitement selon la revendication 14, dans lequel le fluide gazeux est l'air et le premier fluide est de l'eau et dans lequel le deuxième échangeur est alimenté avec l'air d'un bâtiment et le premier échangeur est alimenté avec l'air prélevé à l'extérieur du bâtiment, l'air sortant du premier échangeur étant à une température inférieure à celle de l'air sortant dans le deuxième échangeur thermique, et présentant un taux d'humidité inférieur à celui de l'air sortant du deuxième échangeur thermique.

**Patentansprüche**

**1.** Wärmetauscher mit zumindest drei Fluiden, enthaltend ein Gehäuse, erste Einrichtungen zum Zuführen und Ableiten eines ersten Fluids, zweite Einrichtungen zum Zuführen und Ableiten eines zweiten Fluids und dritte Einrichtungen zum Zuführen und Ableiten eines dritten Fluids, die sich voneinander unterscheiden, zumindest einen Strömungskanal mit Längsachse (X), der ein erstes Längsende und ein zweites Längsende aufweist, und zumindest ein Wärmeaustauschelement (28), das in dem Strömungskanal (30) im Gehäuse angeordnet ist, wobei das Wärmeaustauschelement (28) enthält:

- einen Absorptions-/Desorptionsbereich, der zum Inkontaktbringen zumindest von dem ersten Fluid (F1) und dem zweiten Fluid (F2) bestimmt ist,
- einen Zirkulationsbereich zur Zirkulation des dritten Fluids (F3), wobei der Absorptions-/Desorptionsbereich und der Zirkulationsbereich in dichter Weise voneinander isoliert sind,
- wobei die ersten Zuführ- und Ableiteinrichtungen und die zweiten Zuführ- und Ableiteinrichtungen mit dem Absorptions-/Desorptionsbereich verbunden sind,
- wobei die dritten Zuführ- und Ableiteinrichtungen mit dem Zirkulationbereich verbunden sind,

**dadurch gekennzeichnet, dass** er ferner enthält:

- zumindest eine erste wendelförmige Wand mit einer ersten Fläche, die zumindest teilweise den Absorptions-/Desorptionsbereich begrenzt, und mit einer zweiten Fläche, die der ersten Fläche entgegengesetzt ist und den Zirkulationsbereich zumindest teilweise begrenzt,
- zumindest eine zweite wendelförmige Wand, wobei die erste wendelförmige Wand und die zweite wendelförmige Wand über einen Außenrand verbunden sind und zwischen sich den zweiten Zirkulationsbereich für das dritte Fluid (F3) begrenzen.

**2.** Wärmetauscher nach Anspruch 1, enthaltend einen voll ausgeführten, zentralen Längskern (33), um den herum die erste und die zweite wendelförmige Wand gewickelt sind und mit dem sie in dichter Weise verbunden sind, wodurch ein wendelförmiger Kanal (44) begrenzt wird, der an dem ersten und dem zweiten Längsende des Strömungskanals ausmündet, wobei die ersten wendelförmigen Wände und die zweiten wendelförmigen Wände vorteilhaft mit dem zentralen Längskern (33) so verbunden sind, dass sie zumindest eine Doppelwendel definieren.

**3.** Wärmetauscher nach Anspruch 1 oder 2, wobei zumindest die erste Fläche und/oder die zweite Fläche strukturiert ist, so dass die Tauschfläche vergrößert wird.

**4.** Wärmetauscher nach einem der Ansprüche 1 bis 3, enthaltend eine Tauschstruktur (22) mit mehreren Strömungskanälen (30) mit parallel verlaufenden Längsachsen, und mehrere Tauschelemente (28), wobei jedes Tauschelement (28) in einem Strömungskanal (30) gelagert ist, erste, zweite und dritte Einrichtungen zum Verteilen und Sammeln von dem ersten, zweiten und dritten Fluid in den Strömungskanälen (30) und wendelförmigen Kanälen (44), wobei die ersten, zweiten und dritten Verteil- und Sammeleinrichtungen zumindest eine Verteil-/Sammelvorrichtung (24, 26) enthalten, die sich oberhalb bzw. unterhalb der Tauschstruktur (22) befindet, wobei der Wärmetauscher auch eine obere Verteil-/Sammelvorrichtung (24) enthält, die sich oberhalb der Tauschstruktur (22) befindet, sowie eine untere Verteil-/Sammelvorrichtung (26), die sich unterhalb der Tauschstruktur (22) befindet, wobei die obere und die untere Verteil-/Sammelvorrichtung (24, 26) derart sind, dass sie das Zuführen und Sammeln des in den wendelförmigen Kanälen (44) fließenden dritten Fluids (F3) und das Zuführen und Sammeln des in den Strömungskanälen (30) fließenden ersten (F1) und zweiten (F2) Fluids sicherstellen.

**5.** Wärmetauscher nach Anspruch 4, wobei die untere (26) und die obere (24) Verteil-/Sammelvorrichtung eine Gegenstromzirkulation des zweiten Fluids (F2) gegenüber dem ersten Fluid (F1) und dem dritten Fluid (F3) sicherstellen.

**6.** Wärmetauscher nach Anspruch 5, wobei das erste Fluid (F1) eine Flüssigkeit ist und wobei die obere Verteil-/Sammelvorrichtung (24) eine Versorgung der Strömungskanäle (30) mit dem ersten Fluid (F1) durch Überlaufen sicherstellt, wobei das erste Fluid (F1) einen über die erste Fläche rinnenden Film bildet.

7. Wärmetauscher nach Anspruch 5 oder 6, wobei das dritte Fluid (F3) eine Flüssigkeit ist und wobei die obere Verteil-/Sammelvorrichtung (24) eine Versorgung der wendelförmigen Kanäle (44) durch Überlaufen sicherstellt.

8. Wärmetauscher nach einem der Ansprüche 5, 6 oder 7, wobei das zweite Fluid (F2) ein Gas ist und wobei die untere Verteil-/Sammelvorrichtung (26) die Versorgung der Strömungskanäle (30) mit dem zweiten Fluid (F2) und das Sammeln des ersten Fluids (F1) und/oder des dritten Fluids (F3) sicherstellt.

9. Wärmetauscher nach Anspruch 8, wobei das Gehäuse einen unteren Boden enthält, der das erste Fluid (F1) bzw. das dritte Fluid (F3) sammelt und dazu geeignet ist, einen Vorrat bzw. Puffervorrat zu bilden.

10. Wärmetauscher nach Anspruch 9, wobei die obere Verteil-/Sammelvorrichtung (24) das Sammeln des zweiten Fluids (F2) sicherstellt und wobei die obere Verteil-/Sammelvorrichtung (24) derart ist, dass das zweite Fluid (F2) das erste Fluid (F1) in der oberen Verteil-/Sammelvorrichtung (24) durchströmt, bevor es gesammelt wird.

11. Wärmetauscher nach Anspruch 10, enthaltend einen Kanal, der das Gehäuse umgibt und im Wesentlichen lotrecht zur oberen Verteil-/Sammelvorrichtung (24) verläuft, wobei der Kanal zum Sammeln des zweiten Fluids über zumindest ein erstes Fenster, vorteilhaft über zwei Fenster, bestimmt ist, das bzw. die in dem Gehäuse ausgeführt ist/sind, und/oder enthaltend einen Kanal, der das Gehäuse umgibt und im Wesentlichen lotrecht zur unteren Verteil-/Sammelvorrichtung (26) verläuft und zum Versorgen mit zweitem Fluid (F2) bestimmt ist, wobei der Kanal zum Sammeln des zweiten Fluids (F2) über zumindest ein zweites Fenster, vorteilhaft über zwei Fenster bestimmt ist, das bzw. die in dem Gehäuse ausgeführt ist/sind.

12. Wärmetauscher nach Anspruch 11, wobei die Tauschelemente (28) an ihren Längsenden Verbinder zur Zirkulation des dritten Wärmeträgermediums (F3) enthalten, wobei die Verbinder im Wesentlichen flach ausgeführt sind und bei dem Gehäuse das zumindest eine erste und zweite Fenster so angeordnet sind, dass das Sammeln des zweiten Fluids (F2) parallel zu den Verbindern erfolgt.

13. Absorptionswärmemaschine, enthaltend zumindest einen ersten und einen zweiten Wärmetauscher nach einem der Ansprüche 1 bis 12, wobei der erste Wärmetauscher dazu bestimmt ist, als Absorber betrieben zu werden und der zweite Wärmetauscher dazu bestimmt ist, das Desorber betrieben zu werden, sowie Verbindungskreisläufe zwischen dem ersten und dem zweiten Wärmetauscher, so dass das in dem ersten Wärmetauscher gesammelte erste Fluid den zweiten Wärmetauscher speist, das in dem zweiten Tauscher gesammelte erste Fluid den ersten Tauscher speist, und das in dem zweiten Wärmetauscher gesammelte zweite Fluid den ersten Wärmetauscher speist, wobei der das zweite Fluid fördernde Verbindungskreislauf einen Verdampfer und vorteilhaft einen Kondensator enthält, wobei die Wärmemaschine zumindest einen dritten Wärmetauscher zwischen den ersten Fluiden enthält, die zwischen dem ersten und dem zweiten Wärmetauscher zirkulieren, wobei die Wärmemaschine vorteilhaft dazu bestimmt ist, ein flüssiges Gemisch aus Wasser und $NH_3$ zu verwenden und das zweite Fluid $NH_3$ ist und als zweites Fluid $NH_3$ verwendet wird.

14. System zum Verarbeiten eines gasförmigen Fluids, wobei das gasförmige Fluid das zweite Fluid ist, enthaltend:

   - zumindest einen ersten und einen zweiten Wärmetauscher nach einem der Ansprüche 1 bis 12, wobei der erste Tauscher dazu bestimmt ist, als Absorber betrieben zu werden und der zweite Tauscher dazu bestimmt ist, als Desorber betrieben zu werden,
   - Verbindungskreisläufe zwischen dem ersten und dem zweiten Tauscher, so dass:

      • das in dem ersten Wärmetauscher gesammelte erste Fluid den zweiten Wärmetauscher speist,
      • das in dem zweiten Wärmetauscher gesammelte dritte Fluid den ersten Wärmetauscher speist, nachdem es einer Entspannung unterworfen wurde, und
      • das in dem ersten Wärmetauscher gesammelte dritte Fluid den zweiten Wärmetauscher speist, nachdem es einer Verdichtung unterworfen wurde.

15. Verarbeitungssystem nach Anspruch 14, wobei das gasförmige Fluid Luft ist und das erste Fluid Wasser ist, und wobei der zweite Tauscher mit Luft aus einem Gebäude gespeist wird und der erste Tauscher mit außerhalb des Gebäudes entnommener Luft gespeist wird, wobei die aus dem ersten Tauscher ausströmende Luft eine geringere Temperatur als die aus dem zweiten Wärmetauscher ausströmende Luft hat und einen geringeren Feuchtigkeitsgehalt das die aus dem zweiten Wärmetauscher ausströmende Luft aufweist.

**Claims**

1. Heat exchanger with at least three fluids, comprising an enclosure, first means for supplying and releasing a first fluid, second means for supplying and releasing a second fluid and third means for supplying and releasing a third fluid, separate from one another, at least one fluid channel of longitudinal axis (X) comprising a first longitudinal end and a second longitudinal end, and at least one heat exchange element (28) disposed in the fluid channel (30) in the enclosure, the heat exchange element (28) comprising:

   - an absorption/desorption zone intended to put into contact at least the first fluid (F1) and the second fluid (F2),
   - a zone for circulating the third fluid (F3), the absorption/desorption zone and the circulation zone being isolated, sealing one from the other,
   - the first supply and release means and the second supply and release means being connected to the absorption/desorption zone,
   - the third supply and release means being connected to the circulation zone, **characterised in that** it also comprises:
   - at least one first helicoidal wall comprising a first surface delimiting at least partially the absorption/desorption zone and on a second surface, opposite the first surface, opposite the first surface, delimiting at least partially the circulation zone,
   - at least one second helicoidal wall, the first helicoidal wall and the second helicoidal wall being connected by an outer edge and delimiting the second circulation zone of the third fluid (F3) between them.

2. Heat exchanger according to claim 1, comprising a full, longitudinal central core (33) around which are wound the first and second helicoidal walls and to which they are connected sealed, delimiting a helicoidal channel (44) leading to the level of the first and second longitudinal ends of the fluid channel, the first helicoidal walls and the second helicoidal walls being advantageously connected to the longitudinal central core (33) so as to define at least one double helix.

3. Heat exchanger according to claim 1 or 2, wherein at least the first surface and/or the second surface is structured so as to increase the exchange surface.

4. Heat exchanger according to one of claims 1 to 3, comprising an exchange structure (22) comprising several fluid channels (30) of parallel longitudinal axes, and several exchange elements (28), each exchange element (28) being mounted in a fluid channel (30), the first, second and third means for distributing and collecting the first, second and third fluids in the fluid channels (30) and the helicoidal channels (44), said first, second and third distribution and collection means comprising at least one distributor/collector (24, 26) situated above or below the exchange structure (22), the heat exchanger also comprising an upper distributor/collector (24) situated above the exchange structure (22) and a lower distributor/collector (26) situated below the exchange structure (22), the upper and lower distributors/collectors (24, 26) being such that they ensure the supply and collection of the third fluid (F3) circulating in the helicoidal channels (44) and the supply and collection of first (F1) and second (F2) fluids in the fluid channels (30).

5. Heat exchanger according to claim 4, wherein the lower (26) and upper (24) distributors/collectors ensure a countercurrent circulation of the second fluid (F2) with respect to the first fluid (F1) and to the third fluid (F3).

6. Heat exchanger according to claim 5, wherein the first fluid (F1) is a liquid and wherein the upper distributor/collector (24) ensures a supply of the fluid channels (30) with the first fluid (F1) through overflow, the first fluid (F1) forming a film flowing over the first surface.

7. Heat exchanger according to claim 5 or 6, wherein the third fluid (F3) is a liquid and wherein the upper distributor/collector (24) ensures a supply of the helicoidal channels (44) through overflow.

8. Heat exchanger according to one of claims 5, 6 or 7, wherein the second fluid (F2) is a gas and wherein the lower distributor/collector (26) ensures the supply of the fluid channels (30) with the second fluid (F2) and the collection of the first fluid (F1) and/or of the third fluid (F3).

9. Heat exchanger according to claim 8, wherein the enclosure comprises a lower base collecting the first fluid (F1) or the third fluid (F3), and capable of forming a reserve or a buffer tank.

10. Heat exchanger according to claim 9, wherein the upper distributor/collector (24) ensures the collection of the second fluid (F2) and wherein the upper distributor/collector (24) is such that the second fluid (F2) crosses the first fluid (F1) in the upper distributor/collector (24) before being collected.

11. Heat exchanger according to claim 10, comprising a channel surrounding the enclosure and substantially aligned with the upper distributor/collector (24), said channel being intended for the collection of the second fluid by at least one first window, advantageously two windows, made in the enclosure and/or a channel surrounding the enclosure and substantially aligned with the lower distributor/collector (26) and intended for the supply with second fluid (F2), said channel being intended for the collection of the second fluid (F2) by at least one second window, advantageously two windows, made in the enclosure.

12. Heat exchanger according to claim 11, and wherein the exchange elements (28) comprise connectors at the longitudinal ends thereof for the circulation of the third coolant (F3), said connectors being substantially flat and wherein the enclosure, the at least first and second windows are disposed such that the collection of the second fluid (F2) is made parallel to said connectors.

13. Thermal absorbtion machine comprising at least one first and one second heat exchanger according to one of claims 1 to 12, the first heat exchanger being intended to function as an absorber and the second heat exchanger being intended to function as a desorber, and connection circuits between the first and the second heat exchanger, such that the first fluid collected in the first heat exchanger supplies the second heat exchanger, the first fluid collected in the second exchanger supplies the first exchanger and the second fluid collected in the second heat exchanger supplies the first heat exchanger, the connection circuit transporting the second fluid comprising an evaporator and advantageously a condenser, said heat machine comprising at least one third heat exchanger between the first fluids circulating between the first and the second heat exchanger, wherein, said thermal machine being advantageously intended to use a mixture of liquid water and $NH_3$, and the second fluid is $NH_3$ and as a second fluid, $NH_3$.

14. System for processing a gaseous fluid, the gaseous fluid being the second fluid, comprising:

- at least one first and one second heat exchanger according to one of claims 1 to 12, the first exchanger being intended to function as an absorber and the second exchanger being intended to function as a desorber,
- connection circuits between the first and the second exchanger, such that:

-- the first fluid collected in the first heat exchanger supplies the second heat exchanger,
-- the third fluid collected in the second heat exchanger supplies the first heat exchanger after having been expanded, and
-- the third fluid collected in the first exchanger supplies the second exchanger after having been compressed.

15. Processing system according to claim 14, wherein the gaseous fluid is air and the first fluid is water, and wherein the second exchanger is supplied with air from a building and the first exchanger is supplied with air sampled from outside of the building, the air exiting the first exchanger being at a temperature lower than that of the air exiting into the second heat exchanger, and having a humidity rate lower than that of the air exiting from the second heat exchanger.

**Fig. 1A**

**Fig. 1B**

EP 3 246 651 B1

**Fig. 2A**

**Fig. 2B**

**Fig. 3**

**Fig. 4**

**Fig. 5A**

**Fig. 5B**

**Fig. 6A**

**Fig. 6B**

**Fig. 6C**

**Fig. 7**

**Fig. 8A**

**Fig. 8B**

**Fig. 9**

**Fig. 10**

**Fig. 11A**

**Fig. 11B**

**Fig. 12**

**Fig. 13**

**EP 3 246 651 B1**

**RÉFÉRENCES CITÉES DANS LA DESCRIPTION**

**Documents brevets cités dans la description**

- DE 102007050799